(19) Europäisches Patentamt / European Patent Office / Office européen des brevets

(11) **EP 3 951 923 B1**

(12) **EUROPEAN PATENT SPECIFICATION**

(45) Date of publication and mention
of the grant of the patent:
**04.09.2024  Bulletin 2024/36**

(21) Application number: **20777489.4**

(22) Date of filing: **17.03.2020**

(51) International Patent Classification (IPC):
$H01M\ 4/13^{(2010.01)}$     $H01M\ 4/139^{(2010.01)}$
$H01M\ 4/1393^{(2010.01)}$   $H01M\ 4/36^{(2006.01)}$
$H01M\ 4/48^{(2010.01)}$     $H01M\ 4/587^{(2010.01)}$
$H01M\ 4/62^{(2006.01)}$     $H01M\ 10/0525^{(2010.01)}$
$H01M\ 10/0566^{(2010.01)}$  $H01M\ 4/131^{(2010.01)}$
$H01M\ 4/133^{(2010.01)}$    $H01M\ 4/1391^{(2010.01)}$

(52) Cooperative Patent Classification (CPC):
**H01M 4/364; H01M 4/131; H01M 4/133;
H01M 4/1391; H01M 4/1393; H01M 4/366;
H01M 4/622;** Y02E 60/10

(86) International application number:
**PCT/JP2020/011805**

(87) International publication number:
**WO 2020/196111 (01.10.2020 Gazette 2020/40)**

(54) **SLURRY COMPOSITION FOR NON-AQUEOUS SECONDARY BATTERY NEGATIVE ELECTRODE, NEGATIVE ELECTRODE FOR NON-AQUEOUS SECONDARY BATTERY, AND NON-AQUEOUS SECONDARY BATTERY**

AUFSCHLÄMMUNGSZUSAMMENSETZUNG FÜR DIE NEGATIVE ELEKTRODE EINER NICHTWÄSSRIGEN SEKUNDÄRBATTERIE, NEGATIVE ELEKTRODE FÜR EINE NICHTWÄSSRIGE SEKUNDÄRBATTERIE UND NICHTWÄSSRIGE SEKUNDÄRBATTERIE

COMPOSITION DE SUSPENSION POUR ÉLECTRODE NÉGATIVE DE BATTERIE SECONDAIRE NON AQUEUSE, ÉLECTRODE NÉGATIVE POUR BATTERIE SECONDAIRE NON AQUEUSES ET BATTERIE SECONDAIRE NON AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.03.2019  JP 2019064400**

(43) Date of publication of application:
**09.02.2022  Bulletin 2022/06**

(73) Proprietor: **Zeon Corporation**
**Tokyo 100-8246 (JP)**

(72) Inventors:
• **YAMAMOTO, Norikazu**
**Tokyo 100-8246 (JP)**
• **NITADORI, Hiroyuki**
**Tokyo 100-8246 (JP)**

(74) Representative: **Maiwald GmbH**
**Elisenhof**
**Elisenstraße 3**
**80335 München (DE)**

(56) References cited:
WO-A1-2007/000982     JP-A- 2008 251 965
JP-A- 2016 058 184      JP-A- 2016 058 184
JP-A- 2017 098 204      US-A1- 2010 297 501

**Description**

TECHNICAL FIELD

The present disclosure relates to a slurry composition for a non-aqueous secondary battery negative electrode, a negative electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes (positive and negative electrodes) for the purpose of achieving even higher secondary battery performance.

A negative electrode for a secondary battery, such as a lithium ion secondary battery, normally includes a current collector and an electrode mixed material layer (negative electrode mixed material layer) formed on the current collector. The negative electrode mixed material layer is, for example, formed using a slurry composition that contains a negative electrode active material and a binder dispersed and/or dissolved in a dispersion medium.

In recent years, attempts have been made to further improve secondary battery performance through improvement of slurry compositions used in negative electrode mixed material layer formation.

In one specific example, Patent Literature (PTL) 1 discloses that by producing a negative electrode using a slurry composition obtained by adding a particulate polymer that has a specific surface acid content as a binder to a negative electrode active material including a carbon-based negative electrode active material that has a specific surface functional group content and BET specific surface area, it is possible to inhibit swelling and increased internal resistance of a secondary battery and to cause the secondary battery to display good battery characteristics such as rate characteristics.

CITATION LIST

Patent Literature

PTL 1: WO2016/199353A1

SUMMARY

(Technical Problem)

However, there is still room for improvement in terms of inhibiting swelling for a secondary battery that includes a negative electrode produced using the slurry composition of the conventional technique described above.

Accordingly, one object of the present disclosure is to provide a slurry composition for a non-aqueous secondary battery negative electrode that can form a negative electrode that can inhibit swelling of a secondary battery.

Another object of the present disclosure is to provide a negative electrode for a non-aqueous secondary battery that can inhibit swelling of a secondary battery.

Yet another object of the present disclosure is to provide a non-aqueous secondary battery in which swelling is inhibited.

(Solution to Problem)

The inventors conducted diligent investigation with the aim of solving the problem set forth above. The inventors discovered that it is possible to form a negative electrode that can inhibit swelling of a secondary battery by using a slurry composition for a non-aqueous secondary battery negative electrode that contains water, a particulate polymer including an ethylenically unsaturated carboxylic acid monomer unit in a proportion that is within a specific range, and a negative electrode active material including a negative electrode active material (A) that is graphite particles having a specific orientation ratio and a negative electrode active material (B) that is composite particles in which a conductive carbon film at least partially covers the surface of a specific silicon oxide particle. In this manner, the inventors completed the present disclosure.

Specifically, the present disclosure aims to advantageously solve the problem set forth above, and a presently disclosed slurry composition for a non-aqueous secondary battery negative electrode comprises a negative electrode active material, a particulate polymer, and water, wherein the negative electrode active material includes a negative electrode active material (A) and a negative electrode active material (B), the negative electrode active material (A) is graphite particles having an orientation ratio of not less than 7.5 and not more than 9.5, the orientation ratio is a ratio $I_{004}/I_{110}$ of integrated intensity $I_{004}$ of a peak for (004) planes of the graphite particles and integrated intensity $I_{110}$ of a peak for (110) planes of the graphite particles as measured by powder X-ray diffraction, the negative electrode active material (B) is composite particles each including a silicon oxide particle and a conductive carbon film at least partially covering a surface of the silicon oxide particle, the silicon oxide particle contains silicon oxide represented by $SiO_x$, where $0.5 \leq x < 1.6$, and the particulate polymer includes an ethylenically unsaturated carboxylic acid monomer unit in a proportion of not less than 10 mass% and not more than 70 mass%. By using a slurry for a secondary battery negative electrode that contains, as a negative electrode active material, a negative electrode active material (A) that is graphite particles having a specific orientation ratio and a negative electrode active material (B) that is composite particles in which a conductive carbon film at least partially covers the surface of a specific silicon oxide particle, and that also contains water and a particulate polymer including an ethylenically unsaturated carboxylic acid monomer unit in a proportion that is within a specific range in this manner, it is possible to suppress electrode swelling of an obtained negative electrode and to form a negative electrode that can inhibit swelling of a secondary battery by reducing gas release inside a cell of the secondary battery.

Note that an orientation ratio of graphite particles that is expressed by a ratio ($I_{004}/I_{110}$) of integrated intensity $I_{004}$ of a peak for (004) planes of the graphite particles and integrated intensity $I_{110}$ of a peak for (110) planes of the graphite particles can be determined by a method described in the present specification.

Moreover, the value of x in silicon oxide represented by $SiO_x$ ($0.5 \leq x < 1.6$) can be measured using a method described in JIS-Z2613.

Furthermore, it is possible to confirm that a conductive carbon film at least partially covers the surface of a specific silicon oxide particle in the composite particles through observation thereof using a scanning electron microscope (SEM).

In the presently disclosed slurry composition for a non-aqueous secondary battery negative electrode, the particulate polymer preferably has a tetrahydrofuran-insoluble content ratio of not less than 50 mass% and not more than 95 mass%. When the tetrahydrofuran-insoluble content ratio of the particulate polymer is within the specific range set forth above, electrode pressability of an obtained negative electrode can be improved while also further suppressing electrode swelling of the negative electrode and further inhibiting swelling of a secondary battery.

Note that the "THF-insoluble content ratio" referred to in the present disclosure can be measured using a measurement method described in the EXAMPLES section of the present specification.

In the presently disclosed slurry composition for a non-aqueous secondary battery negative electrode, the particulate polymer preferably further includes an aliphatic conjugated diene monomer unit in a proportion of not less than 15 mass% and not more than 50 mass%. When the particulate polymer includes an aliphatic conjugated diene monomer unit in the specific proportion set forth above in this manner, electrode pressability of an obtained negative electrode can be improved, and swelling of a secondary battery can be further inhibited.

In the presently disclosed slurry composition for a non-aqueous secondary battery negative electrode, the particulate polymer preferably further includes an aromatic vinyl monomer unit in a proportion of not less than 10 mass% and not more than 60 mass%. When the particulate polymer further includes an aromatic vinyl monomer unit in the specific proportion set forth above, stability of the obtained slurry composition for a non-aqueous secondary battery negative electrode can be increased while also increasing flexibility of a formed negative electrode mixed material layer and improving electrode pressability of a negative electrode.

In the presently disclosed slurry composition for a non-aqueous secondary battery negative electrode, the ethylenically unsaturated carboxylic acid monomer unit preferably includes at least one selected from the group consisting of an acrylic acid monomer unit, a methacrylic acid monomer unit, and an itaconic acid monomer unit. When the ethylenically unsaturated carboxylic acid monomer unit includes at least one selected from the group consisting of an acrylic acid monomer unit, a methacrylic acid monomer unit, and an itaconic acid monomer unit, electrode swelling of an obtained negative electrode can be further suppressed, and gas release inside a cell of a secondary battery can be further reduced, which makes it possible to further inhibit swelling of the secondary battery.

In the presently disclosed slurry composition for a non-aqueous secondary battery negative electrode, content of the negative electrode active material (B) as a proportion relative to total content of the negative electrode active material is preferably not less than 5 mass% and not more than 25 mass%. When the content of the negative electrode active material (B) as a proportion relative to the total content of the negative electrode active material is within the specific range set forth above, the capacity of a secondary battery can be increased while also further suppressing electrode swelling of an obtained negative electrode and further inhibiting swelling of the secondary battery.

Moreover, the present disclosure aims to advantageously solve the problem set forth above, and a presently disclosed negative electrode for a non-aqueous secondary battery comprises a negative electrode mixed material layer obtained using any one of the slurry compositions for a non-aqueous secondary battery negative electrode set forth above. A negative electrode that includes a negative electrode mixed material layer obtained using any one of the slurry compositions for a non-aqueous secondary battery negative electrode set forth above in this manner has suppressed electrode swelling and can reduce gas release inside a cell of a secondary battery, and thus can inhibit swelling of the secondary battery.

Furthermore, the present disclosure aims to advantageously solve the problem set forth above, and a presently disclosed non-aqueous secondary battery comprises a positive electrode, a negative electrode, a separator, and an electrolyte solution, wherein the negative electrode is the negative electrode for a non-aqueous secondary battery set forth above. Swelling is inhibited in a non-aqueous secondary battery that includes the negative electrode for a non-aqueous secondary battery set forth above in this manner.

(Advantageous Effect)

According to the present disclosure, it is possible to provide a slurry composition for a non-aqueous secondary battery negative electrode that can form a negative electrode that can inhibit swelling of a secondary battery.

Moreover, according to the present disclosure, it is possible to provide a negative electrode for a non-aqueous secondary battery that can inhibit swelling of a secondary battery.

Furthermore, according to the present disclosure, it is possible to provide a non-aqueous secondary battery in which swelling is inhibited.

DETAILED DESCRIPTION

The following provides a detailed description of embodiments of the present disclosure.

The presently disclosed slurry composition for a non-aqueous secondary battery negative electrode (hereinafter, also referred to simply as a "slurry composition") is used to form a negative electrode of a non-aqueous secondary battery. Moreover, a feature of the presently disclosed negative electrode for a non-aqueous secondary battery is that it includes a negative electrode mixed material layer formed from the presently disclosed slurry composition. Furthermore, a feature of the presently disclosed non-aqueous secondary battery is that it includes the presently disclosed negative electrode for a non-aqueous secondary battery.

(Slurry composition for non-aqueous secondary battery negative electrode)

A feature of the presently disclosed slurry composition for a non-aqueous secondary battery negative electrode is that it contains a negative electrode active material including specific negative electrode active materials (A) and (B), a particulate polymer including an ethylenically unsaturated carboxylic acid monomer unit in a specific proportion, and water. Note that the presently disclosed slurry composition for a non-aqueous secondary battery negative electrode is normally a composition having the negative electrode active material and the particulate polymer dispersed in water serving as a dispersion medium. The presently disclosed slurry composition for a non-aqueous secondary battery negative electrode can be used to form a negative electrode that can inhibit swelling of a secondary battery.

<Negative electrode active material>

The negative electrode active material used in the presently disclosed slurry composition for a non-aqueous secondary battery negative electrode includes a specific negative electrode active material (A) and a specific negative electrode active material (B). Note that the negative electrode active material may optionally include other negative electrode active materials besides the negative electrode active materials (A) and (B).

«Negative electrode active material (A)»

The negative electrode active material (A) is graphite particles having an orientation ratio that is within a specific range. The graphite particles are particles that are formed of a graphitic material.

The graphitic material is a material having high crystallinity (high degree of graphitization) that is obtained through heat treatment of graphitizing carbon at not lower than 2000°C and not higher than 5000°C.

Note that the term "graphitizing carbon" refers to carbon that, among carbonaceous materials having a low degree of graphitization (i.e., low crystallinity) that are obtained through heat treatment and carbonization of a carbon precursor at not lower than 500°C and not higher than 2000°C, is a carbonaceous material for which the carbon structure can easily be changed through the heat treatment temperature.

The graphitizing carbon may be a carbon material made using tar pitch obtained from petroleum or coal as a raw material. Specific examples of the graphitizing carbon include coke, mesocarbon microbeads (MCMB), mesophase pitch-based carbon fiber, and pyrolytic vapor-grown carbon fiber.

The orientation ratio of the graphite particles used as the negative electrode active material (A) is required to be 7.8 or more, and is preferably 8.2 or more. The orientation ratio may be 7.5 or more or 7.6 or more in slurry compositions not forming part of the present invention. Moreover, the orientation ratio of the graphite particles is required to be 9.5 or less, and is preferably 9.0 or less, and more preferably 8.5 or less. When the orientation ratio of the graphite particles is not less than any of the lower limits set forth above, sufficient charge acceptance can be ensured, which makes it possible to inhibit deposition of lithium metal on a negative electrode and inhibit swelling of a secondary battery. On the other hand, when the orientation ratio of the graphite particles is not more than any of the upper limits set forth above, residual stress in a negative electrode can be reduced through reduction of the force required during pressing of a negative electrode web, which makes it possible to suppress swelling of an electrode and inhibit swelling of a secondary battery.

Note that the orientation ratio of the graphite particles is expressed by a ratio ($I_{004}/I_{110}$) of integrated intensity $I_{004}$ of a peak for (004) planes of the graphite particles and integrated intensity $I_{110}$ of a peak for (110) planes of the graphite particles as measured by powder X-ray diffraction.

The orientation ratio ($I_{004}/I_{110}$) of the graphite particles can be determined from integrated intensities $I_{004}$ and $I_{110}$ that are obtained through powder X-ray diffraction measurement of a negative electrode including a negative electrode mixed material layer that contains the graphite particles and has a density of 1.7 g/cm$^3$. More specifically, the orientation ratio ($I_{004}/I_{110}$) of the graphite particles can be determined by a method described in the EXAMPLES section of the present specification.

Moreover, the orientation ratio ($I_{004}/I_{110}$) of the graphite particles can be adjusted by altering the heating temperature, the heating time, the conditions of CIP, and so forth in the subsequently described production method of the negative electrode active material (A) (graphite particles).

Since an appropriate distance between crystals is ensured in the structure of graphite particles having the specific orientation ratio set forth above, these graphite particles have a low tendency to expand due to insertion and release of lithium ions or the like. Therefore, by using a negative electrode active material including the negative electrode active material (A) that is these graphite particles, electrode swelling of an obtained negative electrode can be suppressed and swelling of a secondary battery can be inhibited.

Note that the interplanar spacing (d002) of 002 planes in the graphite particles serving as the negative electrode active material (A) according to wide angle X-ray diffraction is normally 0.3357 nm or more, preferably 0.3358 nm or more, and more preferably 0.3359 nm or more, and is normally 0.348 nm or less, preferably 0.346 nm or less, and more preferably 0.345 nm or less. When the value of d002 is not less than any of the lower limits set forth above, charge/discharge reactivity of a secondary battery can be increased, and high-current charge/discharge characteristics of the secondary battery can be improved. On the other hand, when the value of d002 is not more than any of the upper limits set forth above, crystallinity of the graphite particles can be increased, and charge/discharge capacity of a secondary battery can be increased.

The graphite particles serving as the negative electrode active material (A) are preferably derived from isotropic graphite, but are not specifically limited thereto. More specifically, the graphite particles serving as the negative electrode active material (A) are preferably particles obtained through pulverization of isotropic graphite. Note that the term "isotropic graphite" as used in the present specification refers to a graphitic material that displays isotropy (i.e., has extremely little direction-dependent variation of characteristics).

The particle diameter of the graphite particles serving as the negative electrode active material (A) is not specifically limited and can be set as appropriate within a range with which the desired effects are obtained.

The volume-average particle diameter D50 of the graphite particles serving as the negative electrode active material (A) is preferably 10 $\mu$m or more, and more preferably 12 $\mu$m or more, and is preferably 30 $\mu$m or less, more preferably 25 $\mu$m or less, and even more preferably 20 $\mu$m or less. When the volume-average particle diameter D50 of the graphite particles is not less than any of the lower limits set forth above, a slurry composition having excellent dispersibility can be produced. On the other hand, when the volume-average particle diameter D50 of the graphite particles is not more than any of the upper limits set forth above, electrode pressability of an obtained negative electrode can be increased.

Note that the term "volume-average particle diameter D50" as used in the present specification refers to a particle diameter at which, in a particle size distribution (by volume) measured by laser diffraction, cumulative volume calculated from a small diameter end of the distribution reaches 50%.

{Production method of negative electrode active material (A)}

The graphite particles constituting the negative electrode active material (A) can be produced by a commonly known method without any specific limitations.

For example, graphite particles derived from isotropic graphite that can suitably be used as the negative electrode active material (A) can be produced by the following method.

In this method, petroleum coal tar is heat treated at 400°C to 500°C to obtain green coke. The green coke is then calcinated at 1200°C to 1300°C in an inert gas atmosphere such as $N_2$ for 2 hours to 8 hours to obtain calcinated coke. The calcinated coke is pulverized to a desired particle diameter. The calcinated coke that has been pulverized and a binder such as coal pitch are mixed in a desired ratio at a temperature of 60°C to 90°C to obtain a mixture. This mixture is then pulverized to a desired particle diameter and further particle diameter adjustment is performed using a sieve or the like to obtain a shaping material. The obtained shaping material is shaped by CIP (Cold Isostatic Pressing; also referred to as "cold hydrostatic pressing") to obtain a shaped product. This shaped product is heated at 900°C to 1100°C in an inert gas atmosphere such as $N_2$ and is held thereat for 2 hours to 8 hours so as to remove volatile components formed of organic materials. Thereafter, the shaped product is heated at 2600°C to 3000°C in an inert gas atmosphere such as $N_2$ to cause graphitization and thereby obtain isotropic graphite. The obtained isotropic graphite is pulverized and then subjected to particle diameter adjustment using a sieve or the like, and, in this manner, the graphite particles serving as the negative electrode active material (A) can be obtained.

{Proportional content of negative electrode active material (A)}

The content of the negative electrode active material (A) as a proportion relative to the total content of the negative electrode active material (A) and the negative electrode active material (B) in the slurry composition for a non-aqueous secondary battery negative electrode is preferably 75 mass% or more, more preferably 78 mass% or more, even more preferably 80 mass% or more, and further preferably 90 mass% or more, and is preferably 95 mass% or less. When the content of the negative electrode active material (A) as a proportion relative to the total content of the negative electrode active material (A) and the negative electrode active material (B) is not less than any of the lower limits set forth above, electrode swelling of an obtained negative electrode can be further suppressed, and swelling of a secondary battery can be further inhibited. On the other hand, when the content of the negative electrode active material (A) as a proportion relative to the total content of the negative electrode active material (A) and the negative electrode active material (B) is not more than the upper limit set forth above, the capacity of a secondary battery can be increased.

The content of the negative electrode active material (A) as a proportion relative to the total content of the negative electrode active material in the slurry composition for a non-aqueous secondary battery negative electrode is preferably 75 mass% or more, more preferably 78 mass% or more, even more preferably 80 mass% or more, and further preferably 90 mass% or more, and is preferably 95 mass% or less. When the content of the negative electrode active material (A) as a proportion relative to the total content of the negative electrode active material is not less than any of the lower limits set forth above, electrode swelling of an obtained negative electrode can be further suppressed, and swelling of a secondary battery can be further inhibited. On the other hand, when the content of the negative electrode active material (A) as a proportion relative to the total content of the negative electrode active material is not more than the upper limit set forth above, the capacity of a secondary battery can be increased.

«Negative electrode active material (B)»

The negative electrode active material (B) is composite particles that each include a specific silicon oxide particle and a conductive carbon film at least partially covering the surface of the silicon oxide particle. The capacity of a secondary battery can be increased as a consequence of the negative electrode active material (B) that is the composite particles described above being used as a negative electrode active material.

The silicon oxide particle contains silicon oxide represented by $SiO_x$ ($0.5 \leq x < 1.6$). The silicon oxide represented by $SiO_x$ is a compound that includes Si and at least one of SiO and $SiO_z$ in proportions such that $0.5 \leq x < 1.6$. The silicon oxide represented by $SiO_x$ ($0.5 \leq x < 1.6$) can be formed using a disproportionation reaction of silicon monoxide (SiO), for example, but is not specifically limited to being formed in this manner.

The conductive carbon film is not specifically limited so long as it is a carbon film that displays electrical conductivity and may be a carbon film formed of a carbon material having low crystallinity (low degree of graphitization) that is obtained through baking of a carbon source such as polyvinyl alcohol, polyvinyl pyrrolidone, carboxymethyl cellulose, acetyl cellulose, dextrin, glucose, or sucrose, or may be a carbon film formed of a carbon material having high crystallinity (high degree of graphitization) such as natural graphite or artificial graphite.

The particle diameter of the composite particles serving as the negative electrode active material (B) is not specifically limited and can be set as appropriate within a range with which the desired effects are obtained.

{Production method of negative electrode active material (B)}

The composite particles including silicon oxide particles and conductive carbon films at least partially covering the surfaces of the silicon oxide particles as described above that serve as the negative electrode active material (B) can be produced by a method described below, for example, but are not specifically limited to being produced in this manner.

In this method, silicon oxide represented by $SiO_y$ as a raw material is mixed with a carbon source such as polyvinyl alcohol and is then pulverized using a bead mill or the like to obtain precursor composite particles in which the carbon source at least partially coats the surfaces of particles formed of the silicon oxide represented by $SiO_y$. The obtained precursor composite particles are heated to bake the carbon source and form conductive carbon films, and then adjustment of particle diameter is performed using a mesh or the like as necessary. In this manner, it is possible to obtain composite particles that each include a silicon oxide particle containing silicon oxide represented by $SiO_x$ ($0.5 \leq x < 1.6$) and a conductive carbon film at least partially covering the surface of the silicon oxide particle.

Note that in the preceding description, the value of y in $SiO_y$ may be the same as or different from the value of x in $SiO_x$. The value of y is normally not less than 0.01 and less than 2, and preferably not less than 0.5 and less than 1.6.

The heating temperature during heating of the precursor composite particles is preferably not lower than 850°C and not higher than 1500°C. The heating of the precursor composite particles may be performed in an inert gas atmosphere such as Ar or may be performed in an atmosphere containing an organic gas and/or vapor.

The composite particles serving as the negative electrode active material (B) can, for example, also be obtained by known methods such as a method in which the surfaces of silicon oxide particles containing silicon oxide represented by $SiO_x$ ($0.5 \leq x < 1.6$) (hereinafter, also referred to simply as "$SiO_x$ particles") are coated by conductive carbon films through chemical vapor deposition using an organic gas or the like, or a method in which $SiO_x$ particles are subjected to mechanochemical treatment with graphite or artificial graphite to cause formation of composite particles (granulation).

{Proportional content of negative electrode active material (B)}

The content of the negative electrode active material (B) as a proportion relative to the total content of the negative electrode active material (A) and the negative electrode active material (B) in the slurry composition for a non-aqueous secondary battery negative electrode is preferably 5 mass% or more, and is preferably 25 mass% or less, more preferably 22 mass% or less, even more preferably 20 mass% or less, and further preferably 10 mass% or less. When the content of the negative electrode active material (B) as a proportion relative to the total content of the negative electrode active material (A) and the negative electrode active material (B) is not less than the lower limit set forth above, the capacity of a secondary battery can be further increased. On the other hand, when the content of the negative electrode active material (B) as a proportion relative to the total content of the negative electrode active material (A) and the negative electrode active material (B) is not more than any of the upper limits set forth above, the battery capacity of a secondary battery can be increased while also further suppressing electrode swelling of an obtained negative electrode and further inhibiting swelling of the secondary battery.

The content of the negative electrode active material (B) as a proportion relative to the total content of the negative electrode active material in the slurry composition for a non-aqueous secondary battery negative electrode is preferably 5 mass% or more, and is preferably 25 mass% or less, more preferably 22 mass% or less, even more preferably 20 mass% or less, and further preferably 10 mass% or less. When the content of the negative electrode active material (B) as a proportion relative to the total content of the negative electrode active material is not less than the lower limit set forth above, the capacity of a secondary battery can be further increased. On the other hand, when the content of the negative electrode active material (B) as a proportion relative to the total content of the negative electrode active material is not more than any of the upper limits set forth above, the battery capacity of a secondary battery can be increased while also further suppressing electrode swelling of an obtained negative electrode and further inhibiting swelling of the secondary battery.

<<Other negative electrode active materials>>

The presently disclosed slurry composition for a non-aqueous secondary battery negative electrode may contain other negative electrode active materials besides the negative electrode active materials (A) and (B) described above.

Examples of other negative electrode active materials that can be used include negative electrode active materials among those described in WO2016/199353A1, for example, that do not correspond to the negative electrode active materials (A) and (B) described above.

The content of other negative electrode active materials as a proportion relative to the total content of the negative electrode active material in the slurry composition for a non-aqueous secondary battery negative electrode can be set as not less than 0 mass% and not more than 60 mass%.

<<Amount of negative electrode active material>>

The amount of the negative electrode active material in the slurry composition for a non-aqueous secondary battery negative electrode can be set as appropriate within a range with which the desired effects are obtained.

For example, all negative electrode active material as a proportion relative to all solid content in the slurry composition for a non-aqueous secondary battery negative electrode is preferably not less than 80 mass% and not more than 98 mass% from a viewpoint of battery capacity and productivity.

<Particulate polymer>

In a negative electrode including a negative electrode mixed material layer formed using the presently disclosed slurry composition for a non-aqueous secondary battery negative electrode, the particulate polymer binds components in the negative electrode mixed material layer to one another, or binds these components to a current collector. A polymer that can be dispersed in an aqueous medium such as water can be used as the particulate polymer.

The particulate polymer used in the presently disclosed slurry composition for a non-aqueous secondary battery negative electrode includes an ethylenically unsaturated carboxylic acid monomer unit in a specific proportion. In addition, the particulate polymer may optionally include an aliphatic conjugated diene monomer unit, an aromatic vinyl monomer unit, and other monomer units besides the monomer units mentioned above.

The phrase "includes a monomer unit" as used in the present disclosure means that "a polymer obtained with the monomer includes a repeating unit derived from the monomer".

«Ethylenically unsaturated carboxylic acid monomer unit»

The particulate polymer includes an ethylenically unsaturated carboxylic acid monomer unit in a specific proportion.

Examples of ethylenically unsaturated carboxylic acid monomers that can be used to form the ethylenically unsaturated carboxylic acid monomer unit include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof.

Examples of ethylenically unsaturated monocarboxylic acids include acrylic acid, methacrylic acid, and crotonic acid. Examples of derivatives of ethylenically unsaturated monocarboxylic acids include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of ethylenically unsaturated dicarboxylic acids include maleic acid, fumaric acid, and itaconic acid. Examples of acid anhydrides of ethylenically unsaturated dicarboxylic acids include maleic anhydride, diacrylic anhydride, methylmaleic anhydride, and dimethylmaleic anhydride. Examples of derivatives of ethylenically unsaturated dicarboxylic acids include methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleates.

One of these ethylenically unsaturated carboxylic acid monomers may be used individually, or two or more of these ethylenically unsaturated carboxylic acid monomers may be used in combination in a freely selected ratio.

Of these ethylenically unsaturated carboxylic acids, it is preferable to use at least one selected from the group consisting of acrylic acid, methacrylic acid, and itaconic acid from a viewpoint of further inhibiting swelling of a secondary battery.

The proportional content of the ethylenically unsaturated carboxylic acid monomer unit in the particulate polymer is required to be 10 mass% or more, and is preferably 15 mass% or more, more preferably 20 mass% or more, and particularly preferably 25 mass% or more. Moreover, the proportional content of the ethylenically unsaturated carboxylic acid monomer unit in the particulate polymer is required to be 70 mass% or less, and is preferably 60 mass% or less, and particularly preferably 55 mass% or less. When the proportional content of the ethylenically unsaturated carboxylic acid monomer unit is not less than any of the lower limits set forth above, binding strength of the particulate polymer increases, and good binding can be achieved between components contained in a formed negative electrode mixed material layer and between the negative electrode mixed material layer and a current collector, which makes it possible to suppress electrode swelling of a negative electrode and inhibit swelling of a secondary battery. Moreover, when the proportional content of the ethylenically unsaturated carboxylic acid monomer unit is not less than any of the lower limits set forth above, a homogeneous negative electrode mixed material layer can be formed because dispersibility of components such as the negative electrode active material in the slurry composition for a non-aqueous secondary battery negative electrode increases. On the other hand, when the proportional content of the ethylenically unsaturated carboxylic acid monomer unit is not more than any of the upper limits set forth above, a homogeneous negative electrode mixed material layer can be formed through maintenance of suitable viscosity of the slurry composition for a non-aqueous secondary battery negative electrode, which makes it possible to inhibit degradation of the negative electrode mixed material layer caused by application of excessive electrical potential or the like at non-homogeneous sites and reduce gas release inside a cell of a secondary battery caused by excessive decomposition of electrolyte solution or the like, and thus makes it possible to inhibit swelling of the secondary battery. Moreover, when the proportional content of the ethylenically unsaturated carboxylic acid monomer unit is not more than any of the upper limits set forth above, binding strength of the particulate polymer can be inhibited from conversely decreasing due to excessive hardening, and good binding can be achieved between components contained in a negative electrode mixed material layer and between the negative electrode mixed material layer and a current collector, which makes it possible to suppress electrode swelling of a negative electrode and inhibit swelling of a secondary battery.

«Aliphatic conjugated diene monomer unit»

The particulate polymer preferably further includes an aliphatic conjugated diene monomer unit. The further inclusion of an aliphatic conjugated diene monomer unit in the particulate polymer can increase flexibility of a formed negative electrode mixed material layer and improve electrode pressability of a negative electrode while also further inhibiting swelling of a secondary battery.

Examples of aliphatic conjugated diene monomers that can be used to form the aliphatic conjugated diene monomer unit include, but are not specifically limited to, 1,3-butadiene, 2-methyl-1,3-butadiene, 2,3-dimethyl-1,3-butadiene, 2-chloro-1,3-butadiene, substituted linear conjugated pentadienes, and substituted and side chain conjugated hexadienes. One aliphatic conjugated diene monomer may be used individually, or two or more aliphatic conjugated diene monomers may be used in combination in a freely selected ratio.

Of these examples, it is preferable to use 1,3-butadiene as an aliphatic conjugated diene monomer from a viewpoint of further improving electrode pressability of a negative electrode and even further inhibiting swelling of a secondary battery.

The proportional content of the aliphatic conjugated diene monomer unit in the particulate polymer is preferably 15 mass% or more, and more preferably 20 mass% or more, and is preferably 50 mass% or less, and more preferably 45 mass% or less. When the proportional content of the aliphatic conjugated diene monomer unit is within any of the specific ranges set forth above, flexibility of a formed negative electrode mixed material layer can be increased and electrode pressability of a negative electrode can be further improved while also even further inhibiting swelling of a secondary battery.

<<Aromatic vinyl monomer unit>>

The particulate polymer preferably further includes an aromatic vinyl monomer unit. When the particulate polymer further includes an aromatic vinyl monomer unit, close adherence between the particulate polymer and the negative electrode active material improves due to hydrophobic interaction being displayed with the surface of the previously described negative electrode active material, and stability of the slurry composition for a non-aqueous secondary battery can be increased. This can improve battery characteristics of an obtained secondary battery.

Examples of aromatic vinyl monomers that can be used to form the aromatic vinyl monomer unit include, but are not specifically limited to, styrene, $\alpha$-methylstyrene, vinyltoluene, and divinylbenzene. One aromatic vinyl monomer may be used individually, or two or more aromatic vinyl monomers may be used in combination in a freely selected ratio.

Of these examples, it is preferable to use styrene as an aromatic vinyl monomer from a viewpoint of further increasing stability of the slurry composition for a non-aqueous secondary battery and further improving battery characteristics of a secondary battery.

The proportional content of the aromatic vinyl monomer unit in the particulate polymer is preferably 10 mass% or more, more preferably 15 mass% or more, and even more preferably 20 mass% or more, and is preferably 60 mass% or less, more preferably 55 mass% or less, and even more preferably 50 mass% or less. When the proportional content of the aromatic vinyl monomer unit is not less than any of the lower limits set forth above, stability of the slurry composition for a non-aqueous secondary battery can be increased, and battery characteristics of an obtained secondary battery can be further enhanced. On the other hand, when the proportional content of the aromatic vinyl monomer unit is not more than any of the upper limits set forth above, sufficiently high electrode pressability of an obtained negative electrode can be ensured. This makes it possible to maintain good cycle characteristics and electrolyte solution injectability of a secondary battery.

<<Other monomer units>>

The particulate polymer may include monomer units other than the ethylenically unsaturated carboxylic acid monomer unit, the aliphatic conjugated diene monomer unit, and the aromatic vinyl monomer unit described above (i.e., may include other monomer units) so long as the desired effects are not significantly lost.

Although no specific limitations are placed on the proportional content of other monomer units, the upper limit for the total amount thereof is preferably 6 mass% or less, more preferably 4 mass% or less, and particularly preferably 2 mass% or less.

«Volume-average particle diameter D50»

The volume-average particle diameter D50 of the particulate polymer is preferably 80 nm or more, more preferably 100 nm or more, and even more preferably 150 nm or more, and is preferably 600 nm or less, and more preferably 500 nm or less. When the volume-average particle diameter D50 of the particulate polymer is not less than any of the lower limits set forth above, battery resistance can be suppressed. On the other hand, when the volume-average particle diameter D50 of the particulate polymer is not more than any of the upper limits set forth above, electrode swelling can be inhibited.

The volume-average particle diameter D50 of the particulate polymer can be adjusted by altering the production conditions of the particulate polymer. Specifically, in a case in which the particulate polymer is produced by seeded polymerization, for example, the volume-average particle diameter D50 of the particulate polymer can be controlled by adjusting the number and particle diameter of seed particles used in polymerization.

«Tetrahydrofuran-insoluble content ratio»

The tetrahydrofuran (THF) insoluble content ratio of the particulate polymer is preferably 50 mass% or more, more preferably 55 mass% or more, and even more preferably 60 mass% or more, and is preferably 95 mass% or less, more preferably 90 mass% or less, and even more preferably 85 mass% or less. When the THF-insoluble content ratio of the particulate polymer is not less than any of the lower limits set forth above, binding strength of the particulate polymer increases, and good binding can be achieved between components contained in a formed negative electrode mixed material layer and between the negative electrode mixed material layer and a current collector, which makes it possible to suppress electrode swelling of a negative electrode and inhibit swelling of a secondary battery. On the other hand, when the THF-insoluble content ratio of the particulate polymer is not more than any of the upper limits set forth above, excessive hardening of the particulate polymer can be inhibited, flexibility of a formed negative electrode mixed material layer can be increased, and electrode pressability of an obtained negative electrode can be improved.

Note that the THF-insoluble content ratio of the particulate polymer can be adjusted, for example, through the types and/or amounts of monomers and a molecular weight modifier used in a polymerization reaction.

<<Production method of particulate polymer>>

The particulate polymer can be produced by a known polymerization method without any specific limitations. The method of polymerization is not specifically limited and may, for example, be any of solution polymerization, suspension polymerization, bulk polymerization, and emulsion polymerization. Any polymerization reaction can be used such as, for example, ionic polymerization, radical polymerization, or living radical polymerization. In emulsion polymerization, seeded polymerization in which seed particles are used may be adopted.

Commonly used emulsifiers, dispersants, polymerization initiators, polymerization aids, and the like may be used in the polymerization, and the amounts thereof can be adjusted as appropriate in order to achieve the desired volume-average particle diameter.

It is preferable that a molecular weight modifier is used in the polymerization. By using a molecular weight modifier in the polymerization, it is possible to adjust the molecular weight of the obtained particulate polymer, and it is easy to keep the THF-insoluble content ratio of the particulate polymer within any of the specific ranges set forth above. Note that the molecular weight modifier can be added before the start of polymerization or can be added partway through polymerization.

Specific examples of molecular weight modifiers that can be used include mercaptans such as t-dodecyl mercaptan, n-dodecyl mercaptan, and n-octyl mercaptan; and halogenated hydrocarbons such as carbon tetrachloride and carbon tetrabromide. Of these molecular weight modifiers, it is preferable to use a mercaptan, and particularly preferable to use t-dodecyl mercaptan.

The amount of the molecular weight modifier that is used relative to 100 parts by mass of all monomers used in polymerization is preferably 0.7 parts by mass or more, and more preferably 0.8 parts by mass or more, and is preferably 1.5 parts by mass or less, and more preferably 1.4 parts by mass or less. When the used amount of the molecular weight modifier is not less than any of the lower limits set forth above, the THF-insoluble content ratio of the obtained particulate polymer can be suitably reduced. On the other hand, when the used amount of the molecular weight modifier is not more than any of the upper limits set forth above, the THF-insoluble content ratio can be suitably increased.

<<Amount of particulate polymer>>

The amount of the particulate polymer in the slurry composition for a non-aqueous secondary battery negative electrode can be set as appropriate within a range with which the desired effects are obtained.

For example, as a proportion relative to all solid content in the slurry composition for a non-aqueous secondary battery negative electrode, the particulate polymer is preferably not less than 0.5 mass% and not more than 4.0 mass% from a viewpoint of suppressing battery resistance and inhibiting swelling of a secondary battery.

<Other components>

Besides the negative electrode active material and the particulate polymer described above, the presently disclosed slurry composition for a non-aqueous secondary battery negative electrode may further contain components such as conductive materials, water-soluble polymers, reinforcing materials, leveling agents, and additives for electrolyte solution. These other components can be commonly known components such as described in WO2012/115096A1 and JP2012-204303A, for example, without any specific limitations so long as they do not affect battery reactions.

It is preferable that carboxymethyl cellulose (CMC) is used as a water-soluble polymer from a viewpoint of inhibiting sedimentation of components in the slurry composition.

As a proportion relative to all solid content in the slurry composition, the CMC is preferably not less than 0.7 mass% and not more than 3.0 mass% from a viewpoint of further inhibiting sedimentation of components in the slurry composition.

<Production of slurry composition for non-aqueous secondary battery negative electrode>

The presently disclosed slurry composition for a non-aqueous secondary battery negative electrode can be produced by dispersing the components described above in water serving as a dispersion medium. Specifically, the slurry composition can be produced by mixing the components described above and water using a mixer such as a ball mill, a sand mill, a bead mill, a pigment disperser, a grinding machine, an ultrasonic disperser, a homogenizer, a planetary mixer, or a FILMIX.

Although water is typically used as the dispersion medium, an aqueous solution of any compound or a mixed solution of water and a small amount of an organic medium may alternatively be used.

The solid content concentration of the slurry composition is a concentration that enables homogenous dispersion of the components and may, for example, be set as not less than 30 mass% and not more than 90 mass%. Furthermore, the mixing of the above-described components with the aqueous medium can normally be performed in a temperature range of from room temperature to 80°C for a time of not less than 10 minutes and not more than several hours.

(Negative electrode for non-aqueous secondary battery)

The presently disclosed negative electrode for a non-aqueous secondary battery can be produced using the presently disclosed slurry composition for a non-aqueous secondary battery negative electrode.

The presently disclosed negative electrode for a non-aqueous secondary battery includes a current collector and a negative electrode mixed material layer formed on the current collector, wherein the negative electrode mixed material layer is obtained from the presently disclosed slurry composition for a non-aqueous secondary battery negative electrode. Components contained in the negative electrode mixed material layer are components that were contained in the presently disclosed slurry composition for a non-aqueous secondary battery negative electrode, and suitable ratios of these components are the same as suitable ratios of the components in the slurry composition for a secondary battery negative electrode.

Electrode swelling of the presently disclosed negative electrode for a non-aqueous secondary battery is inhibited. In addition, the presently disclosed negative electrode for a non-aqueous secondary battery can reduce gas release inside a cell of a secondary battery and can thereby inhibit swelling of the secondary battery. Furthermore, the presently disclosed negative electrode for a non-aqueous secondary battery can enhance cycle characteristics of a secondary battery due to electrode swelling thereof being inhibited.

<Production method of negative electrode for non-aqueous secondary battery>

The presently disclosed negative electrode for a non-aqueous secondary battery is produced, for example, through a step of applying the slurry composition for a non-aqueous secondary battery negative electrode set forth above onto the current collector (application step) and a step of drying the slurry composition for a non-aqueous secondary battery negative electrode that has been applied onto the current collector to form a negative electrode mixed material layer on the current collector (drying step).

[Application step]

The slurry composition for a non-aqueous secondary battery negative electrode can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating applied onto the current collector before drying may be appropriately determined in accordance with the thickness of the negative electrode mixed material layer to be obtained after drying.
The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. One of these materials may be used individually, or two or more of these materials may be used in combination in a freely selected ratio.

[Drying step]

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition on the current collector in this manner, it is possible to form a negative electrode mixed material layer on the current collector and thereby obtain a negative electrode for a non-aqueous secondary battery that includes the current collector and the negative electrode mixed material layer.
After the drying step, the negative electrode mixed material layer may be further subjected to a pressing process by mold pressing, roll pressing, or the like. This pressing process can improve peel strength of the negative electrode.

(Non-aqueous secondary battery)

The presently disclosed non-aqueous secondary battery includes a positive electrode, a negative electrode, an electrolyte solution, and a separator, and has the presently disclosed negative electrode for a non-aqueous secondary battery as the negative electrode. Swelling of the presently disclosed non-aqueous secondary battery is inhibited as a result of the presently disclosed negative electrode for a non-aqueous secondary battery being used therein. Moreover, the presently disclosed secondary battery has excellent cycle characteristics as a result of including the presently disclosed negative electrode for a non-aqueous secondary battery for which electrode swelling is inhibited. The following describes the positive electrode, the electrolyte solution, and the separator using a case in which the non-aqueous secondary battery is a lithium ion secondary battery as an example. However, the present disclosure is not limited by these examples.

<Positive electrode>

The positive electrode may be any known positive electrode that is used as a positive electrode for a lithium ion secondary battery. Specifically, the positive electrode that is used may, for example, be a positive electrode obtained by forming a positive electrode mixed material layer on a current collector.
The current collector may be made of a metal material such as aluminum. The positive electrode mixed material layer may be a layer containing a known positive electrode active material, conductive material, and binder.

<Electrolyte solution>

The electrolyte solution can be an electrolyte solution that is obtained by dissolving an electrolyte in a solvent.
The solvent may be an organic solvent that can dissolve an electrolyte. Specifically, the solvent may be an alkyl carbonate solvent to which a viscosity modification solvent is added. Examples of the alkyl carbonate solvent include ethylene carbonate, propylene carbonate, and $\gamma$-butyrolactone. Examples of the viscosity modification solvent include 2,5-dimethyltetrahydrofuran, tetrahydrofuran, diethyl carbonate, ethyl methyl carbonate, dimethyl carbonate, methyl acetate, dimethoxyethane, dioxolane, methyl propionate, and methyl formate.
The electrolyte may be a lithium salt. Examples of the lithium salt include lithium salts described in JP2012-204303A. Of these lithium salts, $LiPF_6$, $LiClO_4$, and $CF_3SO_3Li$ are preferred as electrolytes because they readily dissolve in organic solvents and exhibit a high degree of dissociation.

<Separator>

Examples of the separator include separators described in JP2012-204303A. Of these separators, a microporous membrane made of polyolefinic resin (polyethylene, polypropylene, polybutene, or polyvinyl chloride) is preferred since such a membrane can reduce the total thickness of the separator, which increases the ratio of electrode active material in the lithium ion secondary battery, and consequently increases the volumetric capacity.

<Production method of non-aqueous secondary battery>

The presently disclosed non-aqueous secondary battery can be produced by, for example, stacking the positive electrode and the negative electrode with the separator in-between, performing rolling, folding, or the like of the resultant laminate as necessary in accordance with the battery shape, placing the laminate in a battery container, injecting the electrolyte solution into the battery container, and sealing the battery container. In order to prevent pressure-increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

In the examples and comparative examples, the following methods were used to evaluate the orientation ratio, the THF-insoluble content ratio of a particulate polymer, the electrode pressability and electrode swelling of a negative electrode, and the gas release inside a cell of a secondary battery.

Note that in the case of a polymer that is produced through copolymerization of a plurality of types of monomers, the proportion in the polymer constituted by a repeating unit (monomer unit) that is formed through polymerization of a given monomer is normally, unless otherwise specified, the same as the ratio (charging ratio) of the given monomer among all monomers used in polymerization of the polymer.

<Orientation ratio>

In production of a slurry composition for a non-aqueous secondary battery negative electrode in each of Example 1 (negative electrode active material (A) used), Comparative Example 3 (carbon-based negative electrode active material (C) used), and Comparative Example 4 (carbon-based negative electrode active material (D) used) described further below, a slurry composition for a non-aqueous secondary battery negative electrode was produced in the same way as in each example or comparative example with the exception that the used amount of the negative electrode active material (A), the carbon-based negative electrode active material (C), or the carbon-based negative electrode active material (D) was changed from 86.0 parts to 96.6 parts, the used amount of a negative electrode active material (B) was changed from 9.6 parts to 0.0 parts, and 2.2 parts (in terms of solid content) of a styrenebutadiene copolymer (BM-400B produced by Zeon Corporation) was used instead of 2.2 parts (in terms of solid content) of a particulate polymer. The obtained slurry composition was used to obtain a pre-pressing negative electrode web in the same way as in production of a negative electrode in Example 1. This pre-pressing negative electrode web was rolled to a negative electrode mixed material layer density of 1.7 g/cm$^3$ by a roll press to obtain a negative electrode for orientation ratio measurement.

The obtained negative electrode for orientation ratio measurement was used as a test specimen to measure a chart of (110) planes and (004) planes for the negative electrode active material (A) (graphite particles), the carbon-based negative electrode active material (C), or the carbon-based negative electrode active material (D) that was contained in the negative electrode mixed material layer of the negative electrode by powder X-ray diffraction. With respect to the obtained chart, fitting was performed using an asymmetric Pearson VII function as a profile function so as to perform peak resolving, and the integrated intensity $I_{110}$ for (110) planes and the integrated intensity of a peak for (004) planes were calculated. An orientation ratio $I_{004}/I_{110}$ of the negative electrode active material (A) (graphite particles), the carbon-based negative electrode active material (C), or the carbon-based negative electrode active material (D) that was contained in the negative electrode mixed material layer of the negative electrode for orientation ratio measurement was determined from the calculated values of $I_{110}$ and $I_{004}$.

The conditions in measurement by powder X-ray diffraction were as follows. Note that "2θ" indicates the diffraction angle.

Target: Cu (K-$\alpha$ radiation) graphite monochromator
Slits: Divergence slit =1°, receiving slit = 0.1 mm, scattering slit = 1°
Measurement range and step angle/measurement time:
(110) Planes: 76.5° $\leq$ 2$\theta$ $\leq$ 78.5°, 0.01°/3 s
(004) Planes: 53.5° $\leq$ 2$\theta$ $\leq$ 56.0°, 0.01°/3 s

<THF-insoluble content ratio>

The tetrahydrofuran (THF) insoluble content ratio of a particulate polymer can be determined as the weight of solid content that is insoluble in THF as a proportion (mass%) relative to the weight of all solid content of the particulate polymer. Specifically, a water dispersion containing a particulate polymer that was obtained in each example or comparative example was dried in an environment having a humidity of 50% and a temperature of not lower than 23°C and not higher than 25°C for 3 days and was then further dried in a 120°C environment for 1 hour using a hot air oven so as to obtain a dried dispersion. The dried dispersion that was obtained was then formed into a film of 3 $\pm$ 0.3 mm in thickness and was cut to a roughly square shape having a side length of 5 mm in order to prepare a dry film piece.
The prepared dry film piece was precisely weighed, and the determined weight of the dry film piece was taken to be $W_0$.
Next, the dry film piece was immersed in 100 g of THF at not lower than 23°C and not higher than 25°C for 24 hours so as to cause dissolution. The remaining film piece was pulled out of the THF and was vacuum dried in a 105°C environment for 3 hours. Thereafter, the remaining film piece that had been dried was precisely weighed, and the determined weight of the remaining film piece was taken to be Wi.
The precisely weighed values were used to calculate the THF-insoluble content ratio by the following formula (I).

$$\text{THF-insoluble content ratio (\%)} = (W_1/W_0) \times 100 \qquad (I)$$

<Electrode pressability (spring-back resistance)>

The thickness of a post-pressing negative electrode produced in each example or comparative example was measured and was taken to be T1. After this thickness measurement, the negative electrode was left in a constant-temperature constant-humidity room that was controlled to a temperature of 25°C and a humidity of 50% for 2 days, and then the thickness of the negative electrode was remeasured and was taken to be T2. The rate of change of thickness of the negative electrode (%) (= (T2/T1) $\times$ 100) was calculated, and was evaluated by the following standard. A smaller rate of change of thickness indicates that the negative electrode has better electrode pressability (spring-back resistance).

A: Rate of change of negative electrode thickness of less than 105%
B: Rate of change of negative electrode thickness of not less than 105% and less than 108%
C: Rate of change of negative electrode thickness of 108% or more

<Electrode swelling>

Six lithium ion secondary batteries produced as in each example or comparative example were prepared. Each of these lithium ion secondary batteries was left at rest in a 25°C environment for 24 hours after electrolyte solution injection. The initial capacity of each of the produced lithium ion secondary batteries was subsequently checked, and then the lithium ion secondary batteries were each fully charged by 4.35 V CC-CV charging (cutoff condition: 0.05C) at 1C and 25°C. Thereafter, three of the six batteries that had been produced were dismantled, a thickness meter was used to measure the thickness of the negative electrode at 10 points, and these measured thicknesses were averaged to calculate an average thickness t0. The remaining three batteries were each subjected to 500 cycles (4.35 V-3.0 V) of charging and discharging at 1C and 25°C, and an average thickness t1 of the negative electrodes when fully charged was measured in the same way as described above for t0. The rate of change of negative electrode thickness (%) (= {(t1 - t0)/t0} $\times$ 100) was calculated and was evaluated by the following standard. A smaller rate of change of thickness indicates that electrode swelling of a negative electrode is suppressed, and thus indicates that swelling of a secondary battery including the negative electrode is inhibited.

A: Rate of change of negative electrode thickness of less than 35%
B: Rate of change of negative electrode thickness of not less than 35% and less than 45%

C: Rate of change of negative electrode thickness of 45% or more

<Gas release>

A lithium ion secondary battery produced in each example or comparative example was left at rest at a temperature of 25°C for 5 hours after electrolyte solution injection. Next, the lithium ion secondary battery was charged to a cell voltage of 3.80 V at 0.1C and a temperature of 25°C and was subsequently subjected to 12 hours of aging at a temperature of 60°C. The lithium ion secondary battery was then discharged to a cell voltage of 3.0 V by a 0.2C constant-current method at a temperature of 25°C. Thereafter, the lithium ion secondary battery was CC-CV charged (upper limit cell voltage: 4.40 V) at 0.2C and CC discharged to a cell voltage of 3.0 V by a 0.2C constant-current method.
Next, the volume (V0) of the lithium ion secondary battery was calculated by the Archimedean method. The lithium ion secondary battery was subsequently charged to a cell voltage of 4.40 V by a 0.2C constant-current method at a temperature of 25°C, was left under conditions of a temperature of $60 \pm 2$°C for 14 days (24 hours × 14 = 336 hours), and was then discharged to a cell voltage of 3.0 V at 0.2C and a temperature of 25°C. Thereafter, the cell volume (V1) was measured, and the rate of change of cell volume $\Delta V$ (%) of the lithium ion secondary battery due to gas release ($\Delta V(\%) = \{(V1 - V0)/V0\} \times 100$) was calculated. A smaller rate of change of cell volume of the lithium ion secondary battery indicates that less gas is released inside the cell, and thus indicates that swelling of the lithium ion secondary battery is inhibited.

Rate of volume change:

A: Rate of volume change $\Delta V$ of less than 1%
B: Rate of volume change $\Delta V$ of not less than 1% and less than 3%
C: Rate of volume change $\Delta V$ of 3% or more

(Production examples)

<Production of negative electrode active material (A) (graphite particles having specific orientation ratio)>

Petroleum coal tar was heat treated at 400°C in an autoclave to obtain green coke. This green coke was then calcinated at 1300°C for 5 hours in an inert gas atmosphere to obtain calcinated coke. The calcinated coke was pulverized to a volume-average particle diameter D50 of 25 μm using a pulverizer (for example, a Dynamic Mill produced by Nippon Coke & Engineering Co., Ltd.). A Henschel mixer was used to mix 90 parts of the calcinated coke that had been pulverized and 10 parts of coal pitch at 80°C to obtain a mixture. This mixture was pulverized to a volume-average particle diameter D50 of 22 μm using a pulverizer (for example, a Dynamic Mill produced by Nippon Coke & Engineering Co., Ltd.), and then further particle size adjustment was performed using a 300-mesh sieve to obtain a shaping material. The obtained shaping material was loaded into a cylindrical rubber bag and was sealed therein. The bag was subsequently loaded into a pressure vessel that was filled with water, and pressure was applied thereto at 150 MPa for 5 hours so as to perform CIP.
The resultant shaped product was heated to 1000°C in a $N_2$ atmosphere and was held thereat for 3 hours so as to remove volatile content formed of organic material. The shaped product was subsequently heated to 3000°C in a $N_2$ atmosphere so as to perform graphitization of the shaped product and thereby obtain isotropic graphite. After graphitization, the obtained isotropic graphite was pulverized using an impact pulverizer equipped with a classifier, and coarse powder was removed using a 300-mesh sieve so as to obtain graphite particles (volume-average particle diameter D50: 20 μm) as a negative electrode active material (A). When graphite particles obtained as the negative electrode active material (A) were used to produce a negative electrode for orientation ratio measurement and then the orientation ratio ($I_{004}/I_{110}$) of the negative electrode active material (A) (graphite) in the negative electrode was measured by the previously described method, the orientation ratio ($I_{004}/I_{110}$) was 8.2.

<Production of negative electrode active material (B)>

After mixing 100 parts of silicon monoxide (SiO produced by Osaka Titanium Technologies Co., Ltd.) and 20 parts of polyvinyl alcohol (produced by Tokyo Chemical Industry Co., Ltd.; reagent grade) as a carbon source, wet pulverization thereof was performed using a bead mill, and the surfaces of silicon monoxide particles were coated with polyvinyl alcohol. The obtained mixture was dried in the form of a cake in a nitrogen atmosphere, was subsequently heat treated at 950°C in an argon atmosphere, and was then classified using a 320-mesh to obtain a negative electrode active material (B). Through observation using a scanning electron microscope, it was confirmed that the obtained negative electrode active material (B) was composite particles (volume-average particle diameter D50: 8 $\mu$m) including silicon oxide (SiO$_x$ (x = 1.1)) particles and conductive carbon films at least partially covering the silicon oxide particles.

<Production of carbon-based negative electrode active material (C) (artificial graphite)>

After adding 30 parts of tar pitch as a coating formation material of low crystallinity carbon to 100 parts of spheroidized natural graphite (volume-average particle diameter D50: 20 $\mu$m; tap density: 0.90 g/cm$^3$; BET specific surface area: 6.0 m$^2$/g) as core particles, these materials were mixed at 200°C for 30 minutes using a Henschel mixer.
The obtained mixture was subjected to preliminary baking at 1000°C in a nitrogen atmosphere, was subsequently pulverized, and was then subjected to baking at 2600°C in a nitrogen atmosphere to obtain a composite carbon material.
This composite carbon material was pulverized (mechanochemical treatment) using a MECHANO FUSION System produced by Hosokawa Micron Corporation to obtain a carbon-based negative electrode active material (C) (artificial graphite; volume-average particle diameter D50: 20 $\mu$m).
When the artificial graphite obtained as the carbon-based negative electrode active material (C) was used to produce a negative electrode for orientation ratio measurement and then the orientation ratio ($I_{004}/I_{110}$) of the carbon-based negative electrode active material (C) (artificial graphite) in the negative electrode was measured by the previously described method, the orientation ratio ($I_{004}/I_{110}$) was 10.3.

<Production of carbon-based negative electrode active material (D)>

After adding 30 parts of tar pitch as a coating formation material of low crystallinity carbon to 100 parts of spheroidized natural graphite (volume-average particle diameter D50: 20 $\mu$m; tap density: 0.90 g/cm$^3$; BET specific surface area: 6.0 m$^2$/g) as core particles, these materials were mixed at 200°C for 30 minutes using a Henschel mixer.
The obtained mixture was subjected to preliminary baking at 1000°C in a nitrogen atmosphere, was subsequently pulverized, and was then subjected to baking at 1400°C in a nitrogen atmosphere to obtain a composite carbon material.
This composite carbon material was pulverized (mechanochemical treatment) using a MECHANO FUSION System produced by Hosokawa Micron Corporation to obtain a carbon-based negative electrode active material (D) (volume-average particle diameter D50: 21 $\mu$m).
When the obtained carbon-based negative electrode active material (D) was used to produce a negative electrode for orientation ratio measurement and then the orientation ratio ($I_{004}/I_{110}$) of the carbon-based negative electrode active material (D) in the negative electrode was measured by the previously described method, the orientation ratio ($I_{004}/I_{110}$) was 10.1.

(Example 1)

<Production of particulate polymer>

A 5 MPa pressure-resistant vessel equipped with a stirrer was charged with 211 parts of deionized water, 1.0 parts of sodium alkyl diphenyl ether disulfonate as an emulsifier, 43 parts of styrene as an aromatic vinyl monomer, 32 parts of 1,3-butadiene as an aliphatic conjugated diene monomer, 2 parts of methacrylic acid and 3 parts of acrylic acid as ethylenically unsaturated carboxylic acid monomers, and 1.0 parts of t-dodecyl mercaptan as a molecular weight modifier in this order. Next, the inside of the pressure-resistant vessel was purged three times with nitrogen. Thereafter, 0.2 parts of potassium persulfate as a polymerization initiator was added into the pressure-resistant vessel, was sufficiently stirred, and was subsequently heated to 60°C to initiate polymerization. A reaction was performed for 18 hours and was ended at the point at which the polymerization conversion rate reached 96% to yield seed particles.
After this reaction, 189 parts of deionized water, 20 parts of methacrylic acid as an ethylenically unsaturated carboxylic acid monomer, 0.05 parts of potassium persulfate as a polymerization initiator, and 0.1 parts of sodium carbonate were added to the solution containing the seed particles, were heated to 80°C, and were caused to react for 2 hours, after which, cooling was performed to quench the reaction.
Residual monomer and the like were removed from the resultant solution containing a particulate polymer by thermal-vacuum distillation. After concentrating, 10% sodium hydroxide aqueous solution was added and then water was also added to yield a water dispersion (solid content concentration: 20%; pH: 4.4) containing the desired particulate polymer. This water dispersion was used to measure the THF-insoluble content ratio of the particulate polymer. The result is shown in Table 1. Note that the volume-average particle diameter D50 of the particulate polymer was 150 nm.

<Production of slurry composition for non-aqueous secondary battery negative electrode>

A mixture was obtained by adding 86.0 parts of the negative electrode active material (A) produced as described above, 9.6 parts of the negative electrode active material (B) produced as described above, 1 part of carbon black (produced by TIMCAL; product name: Super C65) as a conductive material, and 1.2 parts in terms of solid content of a 2% aqueous solution of carboxymethyl cellulose (produced by Nippon Paper Industries Co., Ltd.; product name: MAC-350HC) as a thickener into a planetary mixer equipped with a disper blade. The resultant mixture was adjusted to a solid content concentration of 60% with deionized water and was subsequently mixed at 25°C for 60 minutes. Next, the mixture was adjusted to a solid content concentration of 52% with deionized water and was then further mixed at 25°C for 15 minutes to obtain a mixed liquid. Deionized water and 2.2 parts in terms of solid content of the water dispersion of the particulate polymer produced as described above were added to the obtained mixed liquid, and the final solid content concentration was adjusted to 48%. Further mixing was performed for 10 minutes and then a defoaming process was carried out under reduced pressure to yield a slurry composition for a non-aqueous secondary battery negative electrode having good fluidity.

<Production of negative electrode>

The obtained slurry composition for a non-aqueous secondary battery negative electrode was applied onto copper foil of 20 $\mu$m in thickness serving as a current collector by a comma coater such as to have a thickness after drying of approximately 150 $\mu$m. The copper foil with the slurry composition for a lithium ion secondary battery negative electrode applied thereon was conveyed inside a 60°C oven for 2 minutes at a speed of 0.5 m/min to dry the slurry composition. Thereafter, 2 minutes of heat treatment was performed at a temperature of 120°C to obtain a pre-pressing negative electrode web.
The pre-pressing negative electrode web was rolled to a negative electrode mixed material layer thickness of 80 $\mu$m by a roll press to obtain a negative electrode. This negative electrode was used to evaluate electrode pressability. The result is shown in Table 1.

<Production of positive electrode>

A slurry composition for a non-aqueous secondary battery positive electrode was produced by adding, into a planetary mixer, 100 parts of $LiCoO_2$ having a volume-average particle diameter of 5 $\mu$m as a positive electrode active material, 3 parts of acetylene black (produced by Denka Company Limited; product name: HS-100) as a conductive material, 4 parts (in terms of solid content) of polyvinylidene fluoride (produced by Kureha Corporation; product name: #7208) as a binder, and N-methylpyrrolidone as a solvent such that the total solid content concentration was 70%, and then mixing these materials.
The obtained slurry composition for a non-aqueous secondary battery positive electrode was applied onto aluminum foil of 20 $\mu$m in thickness serving as a current collector by a comma coater such as to have a thickness after drying of approximately 150 $\mu$m. Next, the aluminum foil having the slurry composition for a non-aqueous secondary battery positive electrode applied thereon was conveyed inside a 60°C oven for 2 minutes at a speed of 0.5 m/min to dry the slurry composition. Thereafter, 2 minutes of heat treatment was performed at a temperature of 120°C to obtain a positive electrode web.
The pre-pressing positive electrode web was rolled using a roll press to obtain a positive electrode including a positive electrode mixed material layer.

<Preparation of separator>

A separator made of a single layer of polypropylene (produced by Celgard, LLC.; product name: Celgard 2500) was cut out as a 5 cm $\times$ 5 cm square.

<Production of secondary battery>

An aluminum packing case was prepared as a battery case. The positive electrode obtained as described above was cut out as a 4 cm $\times$ 4 cm square and was arranged such that the surface at the current collector-side thereof was in contact with the aluminum packing case. Next, the square separator prepared as described above was arranged on the surface of the positive electrode mixed material layer of the positive electrode. In addition, the negative electrode obtained as described above was cut out as a 4.2 cm $\times$ 4.2 cm square and was arranged on the separator such that the surface at the negative electrode mixed material layer-side thereof faced toward the separator. Thereafter, the aluminum packing case was filled with a $LiPF_6$ solution of 1.0 M in concentration (solvent: mixed solvent of ethylene carbonate (EC)/diethyl carbonate (DEC) = 1/2 (volume ratio); additive: 2 volume% (solvent ratio) of vinylene carbonate) as an electrolyte solution. The aluminum packing case was then closed by heat sealing at 150°C to tightly seal an opening of the aluminum packing, and thereby produce a laminate cell-type lithium ion secondary battery as a non-aqueous secondary battery.

The obtained lithium ion secondary battery was used to evaluate electrode swelling of a negative electrode and gas release inside a cell of a secondary battery by the previously described methods. The results are shown in Table 1.

(Example 2)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the total amount of methacrylic acid used as an ethylenically unsaturated carboxylic acid monomer was changed from 22 parts to 16 parts, the amount of 1,3-butadiene used as an aliphatic conjugated diene monomer was changed from 32 parts to 35 parts, and the amount of styrene used as an aromatic vinyl monomer was changed from 43 parts to 46 parts. The results are shown in Table 1. Note that the volume-average particle diameter D50 of the obtained particulate polymer was 150 nm.

(Example 3)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the total amount of methacrylic acid used as an ethylenically unsaturated carboxylic acid monomer was changed from 22 parts to 10 parts, the amount of 1,3-butadiene used as an aliphatic conjugated diene monomer was changed from 32 parts to 39 parts, and the amount of styrene used as an aromatic vinyl monomer was changed from 43 parts to 48 parts. The results are shown in Table 1. Note that the volume-average particle diameter D50 of the obtained particulate polymer was 154 nm.

(Example 4)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the total amount of methacrylic acid used as an ethylenically unsaturated carboxylic acid monomer was changed from 22 parts to 31 parts, the amount of 1,3-butadiene used as an aliphatic conjugated diene monomer was changed from 32 parts to 27 parts, and the amount of styrene used as an aromatic vinyl monomer was changed from 43 parts to 39 parts. The results are shown in Table 1. Note that the volume-average particle diameter D50 of the obtained particulate polymer was 142 nm.

(Example 5)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the total amount of methacrylic acid used as an ethylenically unsaturated carboxylic acid monomer was changed from 22 parts to 51 parts, the amount of acrylic acid used as an ethylenically unsaturated carboxylic acid monomer was changed from 3 parts to 10 parts, the amount of 1,3-butadiene used as an aliphatic conjugated diene monomer was changed from 32 parts to 17 parts, and the amount of styrene used as an aromatic vinyl monomer was changed from 43 parts to 22 parts. The results are shown in Table 1. Note that the volume-average particle diameter D50 of the obtained particulate polymer was 140 nm.

(Example 6)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the amount of t-dodecyl mercaptan used as a molecular weight modifier was changed from 1.0 parts to 1.3 parts so as to reduce the tetrahydrofuran-insoluble content ratio of the obtained particulate polymer. The results are shown in Table 1. Note that the volume-average particle diameter D50 of the obtained particulate polymer was 152 nm.

(Example 7)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the amount of t-dodecyl mercaptan used as a molecular weight modifier was changed from 1.0 parts to 0.9 parts so as to increase the tetrahydrofuran-insoluble content ratio of the obtained particulate polymer. The results are shown in Table 1. Note that the volume-average particle diameter D50 of the obtained particulate polymer was 148 nm.

(Example 8)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the slurry composition for a non-aqueous secondary battery negative electrode in Example 1, the amount of the negative electrode active material (A) that was used was changed from 86.0 parts to 89.9 parts and the amount of the negative electrode active material (B) that was used was changed from 9.6 parts to 5.7 parts so as to reduce the content of the negative electrode active material (B) as a proportion relative to the total content of the negative electrode active material. The results are shown in Table 1.

(Example 9)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the slurry composition for a non-aqueous secondary battery negative electrode in Example 1, the amount of the negative electrode active material (A) that was used was changed from 86.0 parts to 76.5 parts and the amount of the negative electrode active material (B) that was used was changed from 9.6 parts to 19.1 parts so as to increase the content of the negative electrode active material (B) as a proportion relative to the total content of the negative electrode active material. The results are shown in Table 1.

(Comparative Example 1)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the total amount of methacrylic acid used as an ethylenically unsaturated carboxylic acid monomer was changed from 22 parts to 3 parts, the amount of acrylic acid used as an ethylenically unsaturated carboxylic acid monomer was changed from 3 parts to 1 part, 1 part of itaconic acid was additionally used as an ethylenically unsaturated carboxylic acid monomer, the amount of 1,3-butadiene used as an aliphatic conjugated diene monomer was changed from 32 parts to 48 parts, the amount of styrene used as an aromatic vinyl monomer was changed from 43 parts to 37 parts, and 5 parts of methyl methacrylate and 5 parts of acrylonitrile were additionally used as other monomers. The results are shown in Table 1. Note that the volume-average particle diameter D50 of the obtained particulate polymer was 155 nm.

(Comparative Example 2)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the particulate polymer in Example 1, the total amount of methacrylic acid used as an ethylenically unsaturated carboxylic acid monomer was changed from 22 parts to 35 parts, the amount of acrylic acid used as an ethylenically unsaturated carboxylic acid monomer was changed from 3 parts to 20 parts, 25 parts of itaconic acid was additionally used as an ethylenically unsaturated carboxylic acid monomer, the amount of 1,3-butadiene used as an aliphatic conjugated diene monomer was changed from 32 parts to 10 parts, and the amount of styrene used as an aromatic vinyl monomer was changed from 43 parts to 10 parts. The results are shown in Table 1. Note that the volume-average particle diameter D50 of the obtained particulate polymer was 127 nm.

(Comparative Example 3)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the slurry composition for a non-aqueous secondary battery negative electrode in Example 1, 86.0 parts of the carbon-based negative electrode active material (C) (artificial graphite) described above was used instead of 86.0 parts of the negative electrode active material (A). The results are shown in Table 1.

(Comparative Example 4)

A particulate polymer, a slurry composition for a non-aqueous secondary battery negative electrode, a negative electrode, a positive electrode, a separator, and a secondary battery were produced, and various measurements and evaluations were performed in the same way as in Example 1 with the exception that, in production of the slurry composition for a non-aqueous secondary battery negative electrode in Example 1, 86.0 parts of the carbon-based negative electrode active material (D) described above was used instead of 86.0 parts of the negative electrode active material (A). The results are shown in Table 1.

In Table 1, shown below:

"AA" indicates acrylic acid;
"MAA" indicates methacrylic acid;
"IA" indicates itaconic acid;
"BD" indicates 1,3-butadiene;
"ST" indicates styrene;
"MMA" indicates methyl methacrylate; and
"AN" indicates acrylonitrile.

Table 1

| | | | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|---|
| Slurry composition for non-aqueous secondary battery negative electrode | Particulate polymer | Ethylenically unsaturated carboxylic acid monomer unit (mass%) | AA | 3 | 3 | 3 | 3 | 10 | 3 | 3 | 3 | 3 | 1 | 20 | 3 | 3 |
| | | | MAA | 22 | 16 | 10 | 31 | 51 | 22 | 22 | 22 | 22 | 3 | 35 | 22 | 22 |
| | | | IA | 0 | 0 | 0 | 0 | 0 | 0 | 0 | 0 | 0 | 1 | 25 | 0 | 0 |
| | | | Total | 25 | 19 | 13 | 34 | 61 | 25 | 25 | 25 | 25 | 5 | 80 | 25 | 25 |
| | | Aliphatic conjugated diene monomer unit (mass%) | BD | 32 | 35 | 39 | 27 | 17 | 32 | 32 | 32 | 32 | 48 | 10 | 32 | 32 |
| | | Aromatic vinyl monomer unit (mass%) | ST | 43 | 46 | 48 | 39 | 22 | 43 | 43 | 43 | 43 | 37 | 10 | 43 | 43 |
| | | Other monomer units (mass%) | MMA | 0 | 0 | 0 | 0 | 0 | 0 | 0 | 0 | 0 | 5 | 0 | 0 | 0 |
| | | | AN | 0 | 0 | 0 | 0 | 0 | 0 | 0 | 0 | 0 | 5 | 0 | 0 | 0 |
| | | Total of all monomer units (mass%) | | 100 | 100 | 100 | 100 | 100 | 100 | 100 | 100 | 100 | 100 | 100 | 100 | 100 |

| | | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|
| | | Used amount of molecular weight modifier (t-dodecyl mercaptan) (parts by mass per 100 parts by mass of all monomers) | 1.0 | 1.0 | 1.0 | 1.0 | 1.0 | 1.3 | 0.9 | 1.0 | 1.0 | 1.0 | 1.0 | 1.0 | 1.0 |
| | | THF-insoluble content ratio (mass%) | 62 | 62 | 62 | 62 | 62 | 52 | 66 | 62 | 62 | 62 | 62 | 62 | 62 |
| | Negative electrode active material (A) (mass%) | Graphite particles [orientation ratio ($I_{004}/I_{110}$) = 8.21 | 90 | 90 | 90 | 90 | 90 | 90 | 90 | 94 | 80 | 90 | 90 | - | - |
| | Negative electrode active material (B) (mass%) | $SiO_x$ particles (x = 1.1) + Conductive carbon films | 10 | 10 | 10 | 10 | 10 | 10 | 10 | 6 | 20 | 10 | 10 | 10 | 10 |

EP 3 951 923 B1

| | | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|---|
| Negative electrode active material | Other negative electrode active materials (mass%) | Carbon-based negative electrode active material (C) (artificial graphite) [orientation ratio $(I_{004}/I_{110})$ = 10.3] | - | - | - | - | - | - | - | - | - | - | - | 90 | - |
| | | Carbon-based negative electrode active material (D) [orientation ratio $(I_{004}/I_{110})$ = 10.1] | - | - | - | - | - | - | - | - | - | - | - | - | 90 |
| | Total of all negative electrode active materials (mass%) | | 100 | 100 | 100 | 100 | 100 | 100 | 100 | 100 | 100 | 100 | 100 | 100 | 100 |
| Evakiations | Electrode pressability | | A | A | A | A | A | A | A | A | A | A | C | C | C |
| | Electrode swelling | | A | B | B | A | B | B | A | A | B | C | C | C | C |
| | Gas release | | A | A | B | A | B | A | A | A | A | C | C | B | C |

It can be seen from Table 1 that by using the slurries for a non-aqueous secondary battery negative electrode of Examples 1 to 9, which each contain a negative electrode active material including graphite particles that have an orientation ratio within a specific range and composite particles in which conductive carbon films at least partially cover the surfaces of specific silicon oxide particles, a particulate polymer including an ethylenically unsaturated carboxylic acid monomer unit in a proportion that is within a specific range, and water, electrode swelling of a formed negative electrode is inhibited, and gas release in a secondary battery that includes the negative electrode is inhibited, which makes it possible to inhibit swelling of the secondary battery.

In contrast, it can be seen that swelling of a secondary battery cannot be inhibited in Comparative Examples 1 and 2 in which a particulate polymer including an ethylenically unsaturated carboxylic acid monomer unit in a proportion that is outside of the specific range is used.

It can also be seen that swelling of a secondary battery cannot be inhibited in Comparative Examples 3 and 4 in which a carbon-based negative electrode active material having an orientation ratio that is outside of the specific range is used instead of the graphite particles having an orientation ratio that is within the specific range.

INDUSTRIAL APPLICABILITY

According to the present disclosure, it is possible to provide a slurry composition for a non-aqueous secondary battery negative electrode that can form a negative electrode that can inhibit swelling of a secondary battery.

Moreover, according to the present disclosure, it is possible to provide a negative electrode for a non-aqueous secondary battery that can inhibit swelling of a secondary battery.

Furthermore, according to the present disclosure, it is possible to provide a non-aqueous secondary battery in which swelling is inhibited.

**Claims**

1. A slurry composition for a non-aqueous secondary battery negative electrode comprising a negative electrode active material, a particulate polymer, and water, wherein

   the negative electrode active material includes a negative electrode active material (A) and a negative electrode active material (B),
   the negative electrode active material (A) is graphite particles having an orientation ratio of not less than 7.8 and not more than 9.5,
   the orientation ratio is a ratio $I_{004}/I_{110}$ of integrated intensity $I_{004}$ of a peak for (004) planes of the graphite particles and integrated intensity $I_{110}$ of a peak for (110) planes of the graphite particles as measured by powder X-ray diffraction,
   the negative electrode active material (B) is composite particles each including a silicon oxide particle and a conductive carbon film at least partially covering a surface of the silicon oxide particle,
   the silicon oxide particle contains silicon oxide represented by $SiO_x$, where $0.5 \leq x < 1.6$,
   the particulate polymer includes an ethylenically unsaturated carboxylic acid monomer unit in a proportion of not less than 10 mass% and not more than 70 mass%, and
   the particulate polymer has a volume-average particle diameter D50 of 80 nm or more and 600 nm or less, measured by laser diffraction, which is the particle diameter at which the cumulative volume calculated from a small diameter end of the distribution reaches 50%.

2. The slurry composition for a non-aqueous secondary battery negative electrode according to claim 1, wherein the particulate polymer has a tetrahydrofuran-insoluble content ratio of not less than 50 mass% and not more than 95 mass%, measured according to the method defined in the description.

3. The slurry composition for a non-aqueous secondary battery negative electrode according to claim 1 or 2, wherein the particulate polymer further includes an aliphatic conjugated diene monomer unit in a proportion of not less than 15 mass% and not more than 50 mass%.

4. The slurry composition for a non-aqueous secondary battery negative electrode according to any one of claims 1 to 3, wherein the particulate polymer further includes an aromatic vinyl monomer unit in a proportion of not less than 10 mass% and not more than 60 mass%.

5. The slurry composition for a non-aqueous secondary battery negative electrode according to any one of claims 1 to 4, wherein the ethylenically unsaturated carboxylic acid monomer unit includes at least one selected from the group consisting of an acrylic acid monomer unit, a methacrylic acid monomer unit, and an itaconic acid monomer unit.

6. The slurry composition for a non-aqueous secondary battery negative electrode according to any one of claims 1 to 5, wherein content of the negative electrode active material (B) as a proportion relative to total content of the negative electrode active material is not less than 5 mass% and not more than 25 mass%.

7. A negative electrode for a non-aqueous secondary battery comprising a negative electrode mixed material layer obtained using the slurry composition for a non-aqueous secondary battery negative electrode according to any one of claims 1 to 6.

8. A non-aqueous secondary battery comprising a positive electrode, a negative electrode, a separator, and an electrolyte solution, wherein
the negative electrode is the negative electrode for a non-aqueous secondary battery according to claim 7.

**Patentansprüche**

1. Eine Schlämmezusammensetzung für eine negative Elektrode einer nichtwässrigen Sekundärbatterie umfassend ein Negativelektroden-aktives Material, ein partikelförmiges Polymer und Wasser, wobei

das Negativelektroden-aktive Material ein Negativelektroden-aktives Material (A) und ein Negativelektroden-aktives Material (B) umfasst,
das Negativelektroden-aktive Material (A) aus Graphitpartikeln besteht, die ein Orientierungsverhältnis von nicht weniger als 7,8 und nicht mehr als 9,5 aufweisen,
wobei das Orientierungsverhältnis ein Verhältnis $I_{004}/I_{110}$ ist, gebildet aus der integrierten Intensität $I_{004}$ eines Peaks für (004)-Ebenen der Graphitpartikel und aus der integrierten Intensität $I_{110}$ eines Peaks für (110)-Ebenen der Graphitpartikel, wie gemessen mittels Pulver-Röntgendiffraktion,
das Negativelektroden-aktive Material (B) aus Kompositpartikeln besteht, welche jeweils ein Siliciumdioxidpartikel und einen leitfähigen Kohlenstofffilm, der eine Oberfläche des Siliciumdioxidpartikels zumindest teilweise bedeck, umfassen,
das Siliciumdioxidpartikel Siliciumoxid umfasst, repräsentiert durch $SiO_x$ mit $0,5 \leq x < 1,6$,
das partikelförmige Polymer eine ethylenisch ungesättigte Carbonsäure-Monomereinheit umfasst, in einem prozentualen Anteil von nicht weniger als 10 Gew.-% und nicht mehr als 70 Gew.-%, und
das partikelförmige Polymer einen Volumen-durchschnittlichen Partikeldurchmesser D50 von 80 nm oder mehr und 600 nm oder weniger hat, gemessen mittels Laserdiffraktion, welcher der Partikeldurchmesser ist, bei dem das ausgehend vom niedrigen Ende der Volumenverteilung kalkulierte kumulative Volumen 50% erreicht.

2. Die Schlämmezusammensetzung für eine negative Elektrode einer nichtwässrigen Sekundärbatterie gemäß Anspruch 1, wobei das partikelförmige Polymer einen Tetrahydrofuran-unlöslichen Anteil von nicht weniger als 50 Gew.-% und nicht mehr als 95 Gew.-% aufweist, gemessen gemäß der Methode, welche in der Beschreibung definiert wird.

3. Die Schlämmezusammensetzung für eine negative Elektrode einer nichtwässrigen Sekundärbatterie gemäß Anspruch 1 oder 2, wobei das partikelförmige Polymer außerdem eine aliphatische konjugierte Dien-Monomereinheit umfasst, in einem prozentualen Anteil von nicht weniger als 15 Gew.-% und nicht mehr als 50 Gew.-%.

4. Die Schlämmezusammensetzung für eine negative Elektrode einer nichtwässrigen Sekundärbatterie gemäß irgendeinem der Ansprüche 1 bis 3, wobei das partikelförmige Polymer außerdem eine aromatische Vinylmonomereinheit umfasst, in einem prozentualen Anteil von nicht weniger als 10 Gew.-% und nicht mehr als 60 Gew.-%.

5. Die Schlämmezusammensetzung für eine negative Elektrode einer nichtwässrigen Sekundärbatterie gemäß irgendeinem der Ansprüche 1 bis 4, wobei die ethylenisch ungesättigte Carbonsäure-Monomereinheit mindestens eine Monomereinheit ausgewählt aus der Gruppe bestehend aus einer Acrylsäure-Monomereinheit, einer Methacrylsäure-Monomereinheit und einer Itaconsäure-Monomereinheit umfasst.

6. Die Schlämmezusammensetzung für eine negative Elektrode einer nichtwässrigen Sekundärbatterie gemäß irgendeinem der Ansprüche 1 bis 5, wobei der prozentuale Gehalt an Negativelektroden-aktivem Material (B) relative zum Gesamtgehalt des Negativelektroden-aktiven Materials nicht weniger als 5 Gew.-% und nicht mehr als 25 Gew.-% beträgt.

7. Eine negative Elektrode für eine nichtwässrige Sekundärbatterie umfassend eine Negativelektroden-Materialmix-Schicht, hergestellt unter Verwendung der Schlämmezusammensetzung für eine negative Elektrode einer nichtwässrigen Sekundärbatterie gemäß irgendeinem der Ansprüche 1 bis 6.

8. Eine nichtwässrige Sekundärbatterie umfassend eine positive Elektrode, eine negative Elektrode, einen Separator und eine Elektrolytlösung, wobei
die negative Elektrode die negative Elektrode für eine nichtwässrige Sekundärbatterie gemäß Anspruch 7 ist.

**Revendications**

1. Composition de suspension pour une électrode négative de batterie rechargeable non aqueuse comprenant un matériau actif d'électrode négative, un polymère particulaire et de l'eau, dans laquelle

le matériau actif d'électrode négative comprend un matériau actif d'électrode négative (A) et un matériau actif d'électrode négative (B),
le matériau actif d'électrode négative (A) est constitué de particules de graphite ayant un rapport d'orientation supérieur ou égal à 7,8 et inférieur ou égal à 9,5,
le rapport d'orientation est un rapport $I_{004}/I_{110}$ de l'intensité intégrée $I_{004}$ d'un pic pour les plans (004) des particules de graphite et de l'intensité intégrée $I_{110}$ d'un pic pour les plans (110) des particules de graphite telles que mesurées par diffraction des rayons X sur poudre,
le matériau actif d'électrode négative (B) est constitué de particules composites comprenant chacune une particule d'oxyde de silicium et un film de carbone conducteur recouvrant au moins partiellement une surface de la particule d'oxyde de silicium,
la particule d'oxyde de silicium contient de l'oxyde de silicium représenté par $SiO_x$, où $0,5 \leq x < 1,6$,
le polymère particulaire comprend un motif monomère d'acide carboxylique éthyléniquement insaturé dans une proportion supérieure ou égale à 10 % en masse et inférieure ou égale à 70 % en masse, et
le polymère particulaire a un diamètre de particule moyen en volume D50 supérieur ou égal à 80 nm et inférieur ou égal à 600 nm, mesuré par diffraction laser, qui est le diamètre de particule auquel le volume cumulé calculé à partir d'une limite de faible diamètre de la distribution atteint 50 %.

2. Composition de suspension pour une électrode négative de batterie rechargeable non aqueuse selon la revendication 1, dans laquelle le polymère particulaire a un rapport de teneur en insoluble dans le tétrahydrofurane supérieur ou égal à 50 % en masse et inférieur ou égal à 95 % en masse, mesuré selon le procédé défini dans la description.

3. Composition de suspension pour une électrode négative de batterie rechargeable non aqueuse selon la revendication 1 ou 2, dans laquelle le polymère particulaire comprend en outre un motif monomère diène conjugué aliphatique dans une proportion supérieure ou égale à 15 % en masse et inférieure ou égale à 50 % en masse.

4. Composition de suspension pour une électrode négative de batterie rechargeable non aqueuse selon l'une quelconque des revendications 1 à 3, dans laquelle le polymère particulaire comprend en outre un motif monomère vinylique aromatique dans une proportion supérieure ou égale à 10 % en masse et inférieure ou égale à 60 % en masse.

5. Composition de suspension pour une électrode négative de batterie rechargeable non aqueuse selon l'une quelconque des revendications 1 à 4, dans laquelle le motif monomère d'acide carboxylique éthyléniquement insaturé comprend au moins un motif choisi dans le groupe constitué d'un motif monomère d'acide acrylique, d'un motif monomère d'acide méthacrylique et d'un motif monomère d'acide itaconique.

6. Composition de suspension pour une électrode négative de batterie rechargeable non aqueuse selon l'une quelconque des revendications 1 à 5, dans laquelle la teneur en matériau actif d'électrode négative (B) en proportion par rapport à la teneur totale en matériau actif d'électrode négative est supérieure ou égale à 5 % en masse et inférieure ou égale à 25 % en masse.

7. Électrode négative pour une batterie rechargeable non aqueuse comprenant une couche de matériau mixte d'électrode négative obtenue à l'aide de la composition de suspension pour une électrode négative de batterie rechargeable non aqueuse selon l'une quelconque des revendications 1 à 6.

8. Batterie rechargeable non aqueuse comprenant une électrode positive, une électrode négative, un séparateur et une solution d'électrolyte, dans laquelle
l'électrode négative est l'électrode négative pour une batterie rechargeable non aqueuse selon la revendication 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016199353 A1
- WO 2012115096 A1
- JP 2012204303 A